# EUROPÄISCHE PATENTSCHRIFT

(11) **EP 2 479 017 B1**
(45) Veröffentlichungstag und Bekanntmachung des Hinweises auf die Patenterteilung: **26.02.2014**
(21) Anmeldenummer: 11191861.1
(22) Anmeldetag: 05.12.2011
(51) Int. Cl.: B29C 47/08, B29C 47/36, B29C 47/02, B29C 47/32, B29D 30/30, B29D 30/62, B29D 30/16, B29D 30/48

(54) **Verfahren zum Applizieren von Materialstreifen aus einer unvulkanisierten Rohgummimischung auf einer Reifenaufbautrommel**
Method for applying strips of material from an unvulcanised raw rubber mixture to a tyre construction drum
Procédé d'application de bandes de matériau à partir d'un mélange de caoutchouc brut non vulcanisé sur un tambour de montage de pneu

(30) Priorität: 21.01.2011 DE 102011000253
(43) Veröffentlichungstag der Anmeldung: 25.07.2012
(73) Patentinhaber: Continental Reifen Deutschland GmbH, 30165 Hannover (DE)
(72) Erfinder: Geffert, Ulrich, 31848 Bad Münder (DE); Elsen, Patrick, 5312 Contern, LU (LU); Meyer, Stephan, 31535 Neustadt (DE); Steiner, Frank, 30451 Hannover (DE)
(74) Vertreter: Finger, Karsten

(56) Entgegenhaltungen:
- EP-A1- 2 338 662
- EP-A2- 1 418 043
- WO-A1-2005/021643
- DE-A1- 4 315 469
- DE-U1- 29 720 892
- US-A- 6 112 848
- US-A1- 2005 161 163

## Beschreibung

Die Erfindung betrifft ein Verfahren zum Applizieren von Materialstreifen aus einer unvulkanisierten Rohgummimischung auf einer Reifenaufbautrommel zur Herstellung von Fahrzeugreifen.

Nach den bekannten Verfahren und mit den bekannten Vorrichtungen zum Aufspulen eines Materialstreifens aus einer Rohgummimischung wird eine vorerst extrudierte Rundschnur mittels eines Kalandrierprozesses in eine geometrisch definierte Form gebracht. Der derart hergestellte Materialstreifen wird mittels einer Belegerolle auf einen Reifenrohling aufgespult. Die Erfahrung zeigt, dass bei den bekannten Verfahren in Abhängigkeit von der Temperatur, der Viskosität der Gummimischung und dem Betriebszustand (Starten, Stoppen) die Geometrie des in der Kalandriereinrichtung hergestellten Materialstreifens schwankt. Ein weiterer Nachteil ist, dass durch die Kalandriereinrichtung ein großer Bauraum beansprucht wird und die Anordnung nur durch einen hohen Aufwand in Ihrer Position zur Reifenaufbautrommel verfahrbar ist.

Andere bekannte Verfahren zur Herstellung von Reifenrohlingen sind in der EP 1418043 A2, DE 297 20 892 U1, WO 2005/ 021634 A1, US 6 112 848 A, DE 43 15 469 A1, US 2005/ 161163 A1, EP 2338662 A1 offenbart.

Der Erfindung liegt die Aufgabe zugrunde, ein Verfahren und eine Vorrichtung zum Applizieren von Materialstreifen aus einer unvulkanisierten Rohgummimischung auf einer Reifenaufbautrommel zu schaffen, mit dem dünne Materialstreifen an beliebiger Position an der Reifenkarkasse einfach aufgetragen werden können.

Die Aufgabe wird durch ein Verfahren nach Anspruch 1 gelöst.

Die Erfindung gestattet das Herstellen eines qualitativ einwandfreien Materialstreifens, der auf einfache Weise auf die Reifenaufbautrommel aufgewickelt werden kann. Es können außerdem Streifen mit kleinen Querschnitten und besonders geringen Höhen prozesssicher hergestellt und aufgespult werden. Das erfindungsgemäße Verfahren und die erfindungsgemäße Vorrichtung ermöglichen zudem eine flexible Anordnung der Rohgummistreifen auf die Reifenkarkasse beziehungsweise die Reifenaufbautrommel. Der Platzbedarf der erfindungsgemäßen Vorrichtung ist gering, da die gesamte Vorrichtung aus Extruder, Zahnradpumpe, Schlauch und Düse in Längs- und Querrichtung bewegbar ist. Der kurze Abstand zwischen Düse und Reifenrohling verbessern außerdem die Qualität des hergestellten Materialstreifens.

Bei einer bevorzugten Ausführungsform des erfindungsgemäßen Verfahrens kann der Schlauch bogenförmig von 0 bis mindestens 120 Grad, vorzugsweise bis 90 Grad in der Horizontalen in beide Richtungen bewegt werden. Durch diese flexible Anordnung des Schlauches kann die Düse an jeder beliebigen Stelle des Reifenrohlings, auch auf den Seitenwänden, Materialstreifen auflegen ohne das dazu mit einem hohen Aufwand die gesamte Verfahrensanordnung neu positioniert werden muss. Durch den flexiblen Schlauch wird außerdem nur ein geringer Bauraum beansprucht.

Es ist vorgesehen, dass der Schlauch einem Druck von mindestens 800 bar standhält. Die Rohgummimischung wird mit einem hohen Druck durch die Düse gepresst. Deswegen muss auch der Schlauch diesen hohen Belastungen standhalten.

Es ist vorgesehen, dass der Schlauch mit einer Verstärkung, z.B. aus einer gewebten Metallarmierung, versehen ist. Dadurch wird der Schlauch stabiler und kann mit einem höheren Druck belastet werden.

In einer weiteren vorteilhaften Weiterbildung ist vorgesehen, dass zum Erzeugen des hohen Arbeitsdruckes in der Rohgummimischung eine Zahnradpumpe verwendet wird. Besonders Vorteilhaft bei der Verwendung einer Zahnradpumpe ist, dass diese die Pulsation des Extrudes kompensiert. Der ungleichmäßige Materialfluss aus dem Extruder wird durch den Einsatz einer Zahnradpumpe geglättet und ein gleichmäßiger Fluss der Rohgummimasse in den Schlauch ermöglicht.

In einer weiteren vorteilhaften Weiterbildung ist vorgesehen, dass die gesamte Vorrichtung aus Extruder, Zahnradpumpe, Schlauch und Düse in Längs- und Querrichtung bewegbar ist. Dadurch ist es ohne großen Aufwand möglich, die Materialstreifen an einer beliebigen Stelle auf der Reifenkarkasse zu platzieren.

In einer weiteren vorteilhaften Weiterbildung ist vorgesehen, dass die Düse am Schlauch eine schlitzförmige Öffnung aufweist. Dadurch kann ein sehr dünner Materialstreifen erzeugt werden, der z.B. für die genaue Herstellung der Reifenkontur wesentlich ist.

In einer weiteren vorteilhaften Weiterbildung ist vorgesehen, dass die Reifenaufbautrommel ortsfest ist und nur rotatorisch bewegt wird. Dadurch lässt sich der Materialstreifen mit einer hohen Geschwindigkeit auf die Reifenkarkasse aufspulen.

Es ist vorgesehen, dass der erzeugte Materialstreifen eine Dicke von 0,2 - 1,5mm, vorzugsweise ca. 0,7 mm und eine Breite von 5 - 15mm aufweist. Mit den dünnen Materialstreifen lässt sich die Herstellungsqualität der Fahrzeugreifen wesentlich verbessern.

In einer weiteren vorteilhaften Weiterbildung ist vorgesehen, dass die Reifenaufbautrommel einen segmentierten Kern aufweist, wobei der Kern auf seiner Außenseite den Reifenholraum des Reifenrohlings nachbildet. Der segmentierte Kern bietet einen optimalen Halt für die Reifenkarkasse auf die die Materialstreifen aufgespult werden. Denkbar ist auch das spiralförmige Aufwickeln auf einer bombierten Karkasse umzusetzen, die z.B. auf einem Nutspannkopf angeordnet ist.

Weitere Merkmale, Vorteile und Einzelheiten der Erfindung werden nun anhand der Zeichnung, die schematisch ein Ausführungsbeispiel darstellt, näher beschrieben. Dabei zeigen:
- Fig. 1: die Seitenansicht auf die Vorrichtung aus Extruder, Zahnradpumpe, Schlauch und Düse, angeordnet vor einer Reifenaufbautrommel
- Fig. 2: die Aufsicht auf die Vorrichtung aus Extruder, Zahnradpumpe, Schlauch und Düse, angeordnet vor der Reifenaufbautrommel,
- Fig. 3: die Aufsicht auf die Vorrichtung aus Extruder, Zahnradpumpe, Schlauch und Düse, angeordnet neben der Reifenaufbautrommel.

Die Figuren zeigen eine Vorrichtung zum Auftragen von Materialstreifen aus einer unvulkanisierten Rohgummimischung auf einer Reifenaufbautrommel zur Herstellung von Fahrzeugreifen.

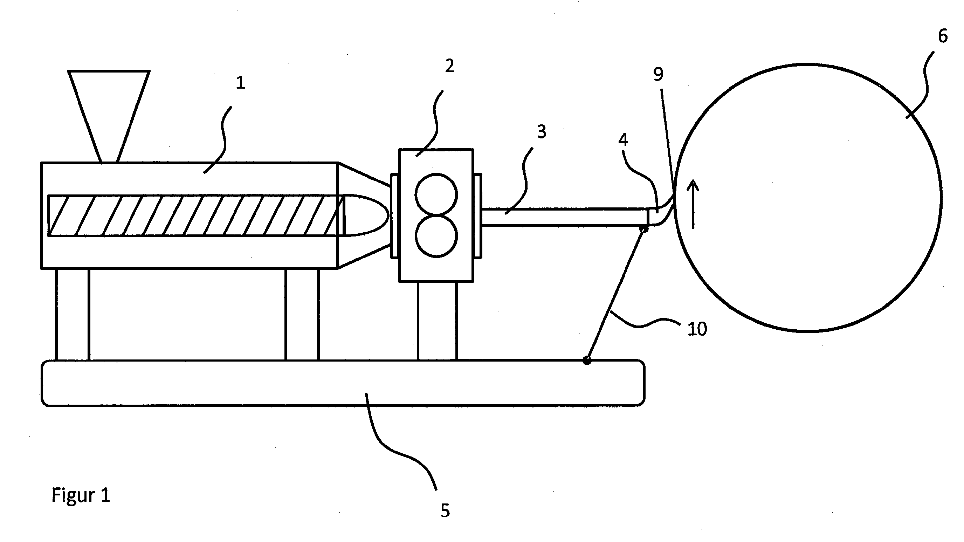

Die Figur 1 zeigt die Vorrichtung in der Seitenansicht. Die Vorrichtung aus Extruder 1, Zahnradpumpe 2, flexiblem Schlauch 3 und Düse 4 ist auf einer Plattform 5 angeordnet. Die Rohgummimasse bzw. Rohgummimischung wird durch einen Extruder 1 bereitgestellt. Vom Extruder 1 wird die Rohgummimasse der Zahnradpumpe 2 zugeführt. Hier wird ein hoher Arbeitsdruck in der Rohgummimischung erzeugt und der durch den Extruder 1 erzeugte ungleichmäßige Materialfluss kompensiert. Durch den hohen Arbeitsdruck wird die Rohgummimasse in einen flexiblen Schlauch 3 gepresst. Über eine Düse 4 wird schließlich ein Materialstreifen erzeugt und auf die sich nur rotatorisch bewegenden Reifenaufbautrommel, auf der bereits vorab eine Reifenkarkasse aufgebracht wurde. Die Reifenkarkasse ist auf einer Reifenaufbautrommel angeordnet, wobei die Reifenaufbautrommel einen segmentierten Kern aufweist, wobei der Kern auf seiner Außenseite den Reifenholraum des Reifenrohlings nachbildet.

Denkbar ist es, den Schlauch 3 mit dem Gestänge 10 zu halten, welches ebenfalls die Funktion hat den Schlauch 3 in der Horizontalen zu bewegen.

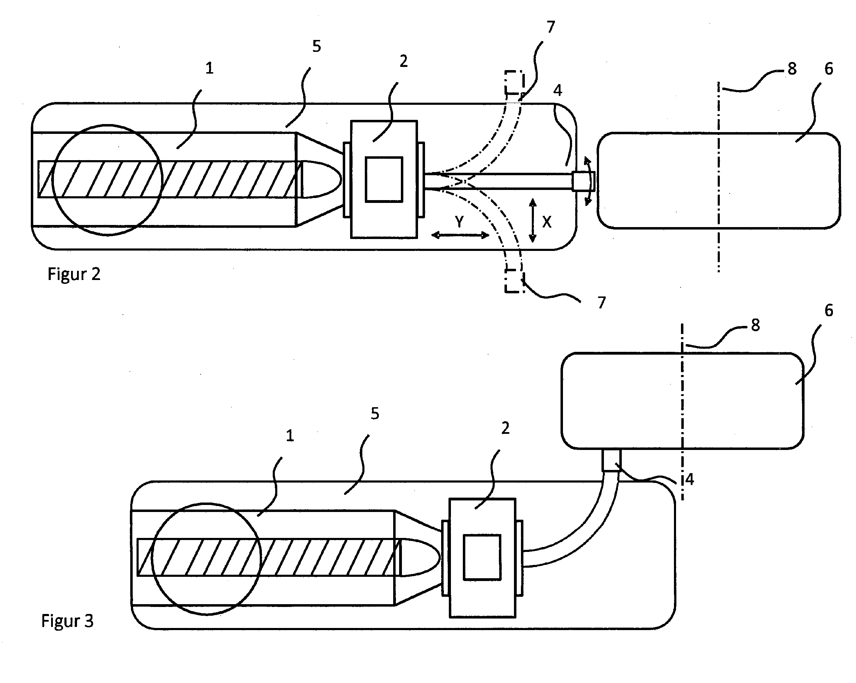

Fig. 2 und Fig. 3 zeigen die Vorrichtung zum Aufwickeln von Materialstreifen in der Aufsicht. Durch die gestrichelte Linie wird in der Position 7 die maximale Auslenkung des Schlauches zu beiden Richtungen in der Horizontalen dargestellt, die in der Blattebene liegt.

In der Fig. 3 wird die Vorrichtung zum Auftragen von Materialstreifen in einer Position dargestellt, die es ermöglicht auch auf die Seiten der Reifenkarkasse Materialstreifen aus Rohgummi aufzutragen. Die Plattform 5 wird dabei in benötigtem Maße in Längs- und Querrichtung X und Y verschoben. Anschließend wird der flexible Schlauch 3 in die gewünschte Position an der Reifenkarkasse 6 gebracht. Durch die Möglichkeit nicht nur die Plattform 5 in ihrer Position zu verändern, sondern auch den Schlauch 3 flexibel anordnen zu können, wird für die komplette Vorrichtung nur ein geringer Bauraum beansprucht. Durch die Kombination aus einer in Längs- und Querrichtung verschiebbaren Plattform 5 und einem flexiblen Schlauch 3 lässt sich durch wenige Positionsänderungen an jeder Stelle auf der Reifenkarkasse entsprechende Reifenaufbauteile aufspulen, z.B. der Apex, der Rim-Strip, die Seitenwand oder der Laufstreifen.

### Bezugsziffernliste

- 1: Extruder
- 2: Zahnradpumpe
- 3: flexibles Schlauchstück
- 4: Düse
- 5: Plattform
- 6: Reifenkarkasse, die auf einer segmentierten Reifenaufbautrommel angeordnet ist
- 7: Maximale Auslenkung des Schlauchstückes
- 8: Rotationsachse der Reifenaufbautrommel
- 9: Materialstreifen
- 10: Gestänge, welches den Schlauch hält und in der Horizontalen in beide Richtungen verfahren werden kann
- X: Querrichtung
- Y: Längsrichtung

## Patentansprüche

1. Verfahren zum Applizieren von Materialstreifen (9) aus einer unvulkanisierten Rohgummimischung auf einer Reifenaufbautrommel zur Herstellung von Fahrzeugreifen mit folgenden Schritten:
a) Anordnen einer Reifenkarkasse (6) auf einer Reifenaufbautrommel,
b) Bereitstellen einer Rohgummimischung zur Herstellung der Materialstreifen (9) durch einen Extruder (1),
c) Zuführen der Rohgummimischung zu einer Kompressionsvorrichtung (2) zum Aufbringen eines hohen Arbeitsdrucks im Material,
d) Pressen des Materials in einen flexiblen Schlauch (3) an dessen Ende sich eine Düse (4) befindet, wobei die Düse (4) vor oder seitlich der Reifenaufbautrommel positioniert wird,
wobei der Schlauch (3) einem Arbeitsdruck von mindestens 800 bar standhält,
wobei die Düse (4) am Schlauch eine schlitzförmige Öffnung aufweist,
e) spiralförmiges Aufwickeln des Materials durch die Düse (4) am Schlauch (3) auf die rotierende Reifenkarkasse (6), die auf der Reifenaufbautrommel anliegt, wobei der Materialstreifen (9) bei Austreten aus der Düse (4) eine sehr dünne Querschnittskontur aufweist, wobei der erzeugte Materialstreifen (9) eine Dicke von 0,2 - 1,5mm und eine Breite von 5 - 15mm aufweist,
f) Weiterverarbeitung des Reifenrohlings nach einem konventionellen Herstellverfahren.

2. Verfahren nach Anspruch 1,
**dadurch gekennzeichnet, dass**
der Schlauch (3) mit der Düse (4) bogenförmig von 0 bis mindestens 120 Grad, vorzugsweise bis 90 Grad, in der Horizontalen in beide Richtungen bewegt werden kann.

3. Verfahren nach einem der vorgehenden Ansprüche,
**dadurch gekennzeichnet, dass**
der Schlauch (3) mit einer Verstärkung, z.B. aus gewebter Metallarmierung versehen ist.

4. Verfahren nach einem der vorhergehenden Ansprüche,
**dadurch gekennzeichnet, dass**
zum Erzeugen des hohen Arbeitsdruckes in der Rohgummimischung eine Zahnradpumpe (2) verwendet wird.

5. Verfahren nach einem der vorhergehenden Ansprüche,
**dadurch gekennzeichnet, dass**
die gesamte Vorrichtung aus Extruder (1), Zahnradpumpe (2), Schlauch (3) und Düse (4) in Längs- und Querrichtung bewegbar ist.

6. Verfahren nach einem der vorhergehenden Ansprüche,
**dadurch gekennzeichnet, dass**
die Reifenaufbautrommel ortsfest ist und nur rotatorisch bewegt wird.

7. Verfahren nach einem der vorhergehenden Ansprüche,
**dadurch gekennzeichnet, dass**
mit dem Materialstreifen (9) der Apex-, der Rim-Strip-, die Seitenwand-, Base-oder Cap-Lage auf die Reifenkarkasse (6) aufgespult wird.

8. Verfahren nach einem der vorhergehenden Ansprüche,
**dadurch gekennzeichnet, dass** die Reifenaufbautrommel einen segmentierten Kern aufweist, wobei der Kern auf seiner Außenseite den Reifenholraum des Reifenrohlings nachbildet.

## Claims

1. Method for applying strips of material (9) from an unvulcanized raw rubber mixture to a tyre building drum for producing pneumatic tyres, comprising the following steps:
a) arranging a tyre carcass (6) on a tyre building drum,
b) providing a raw rubber mixture for producing the strips of material (9) by an extruder (1),
c) feeding the raw rubber mixture to a compression device (2) for applying a high working pressure in the material,
d) pressing the material into a flexible tube (3), at the end of which a nozzle (4) is located, the nozzle (4) being positioned in front of or to the side of the tyre building drum,
the tube (3) withstanding a working pressure of at least 800 bar,
the nozzle (4) on the tube having a slit-shaped opening,
e) spirally winding the material through the nozzle (4) on the tube (3) onto the rotating tyre carcass (6), which is resting on the tyre building drum, the strip of material (9) having a very thin cross-sectional contour as it leaves the nozzle (4), the strip of material (9) produced having a thickness of 0.2 - 1.5 mm and a width of 5 - 15 mm,
f) processing the tyre blank further by a conventional production process.

2. Method according to Claim 1, **characterized in that** the tube (3) with the nozzle (4) can be moved horizontally in both directions in the form of an arc from 0 up to at least 120 degrees, preferably up to 90 degrees.

3. Method according to one of the preceding claims, **characterized in that** the tube (3) is provided with a reinforcement, for example of woven metal armouring.

4. Method according to one of the preceding claims, **characterized in that** a gear pump (2) is used for producing the high working pressure in the raw rubber mixture.

5. Method according to one of the preceding claims, **characterized in that** the entire apparatus comprising the extruder (1), the gear pump (2), the tube (3) and the nozzle (4) is movable in the longitudinal direction and the transverse direction.

6. Method according to one of the preceding claims, **characterized in that** the tyre building drum is fixed in place and only moved in a rotary manner.

7. Method according to one of the preceding claims, **characterized in that**, with the strip of material (9), the apex, rim-strip, sidewall, base or cap ply is wound onto the tyre carcass (6).

8. Method according to one of the preceding claims, **characterized in that** the tyre building drum has a segmented core, the core replicating on its outer side the tyre cavity of the tyre blank.

## Revendications

1. Procédé pour appliquer des rubans de matière (9) constitués d'un mélange de caoutchouc brut non vulcanisé sur un tambour de montage de bandage de roue destiné à réaliser des bandages de roue de véhicule, le procédé présentant les étapes suivantes :
a) placer une carcasse (6) de bandage de roue sur un tambour de montage de bandage de roue,
b) préparer à l'aide d'une extrudeuse (1) un mélange de caoutchouc brut servant à réaliser les rubans de matière (9),
c) amener le mélange de caoutchouc brut à un dispositif de compression (2) qui applique une haute pression de travail dans la matière,
d) refouler la matière dans un tuyau flexible (3) doté d'une tuyère (4) à son extrémité, la tuyère (4) étant placée en amont ou sur le côté du tambour de montage de bandage de roue, le tuyau flexible (3) résistant à une pression de travail d'au moins 800 bars, la tuyère (4) prévue sur le tuyau flexible présentant une ouverture en fente,
e) à l'aide de la tuyère (4) prévue sur le tuyau flexible (3), enrouler la matière en spirale sur la carcasse (6) de bandage de roue mise en rotation, le ruban (9) de matière présentant une section transversale à contour très mince à sa sortie de la tuyère (4), le ruban (9) de matière ainsi formé présentant une épaisseur de 0,2 à 1,5 mm et une largeur de 5 à 15 mm,
f) poursuite du traitement de l'ébauche de bandage de roue par un procédé classique de fabrication.

2. Procédé selon la revendication 1, **caractérisé en ce que** le tuyau flexible (3) doté de la tuyère (4) pouvant être déplacé à l'horizontale dans les deux sens en un arc de cercle de 0 à au moins 120 degrés et de préférence à 90 degrés.

3. Procédé selon l'une des revendications précédentes, **caractérisé en ce que** le tuyau flexible (3) est doté d'un renfort, par exemple en armature métallique tissée.

4. Procédé selon l'une des revendications précédentes, **caractérisé en ce que** pour établir la haute pression de travail dans le mélange de caoutchouc brut, il recourt à une pompe (2) à engrenages.

5. Procédé selon l'une des revendications précédentes, **caractérisé en ce que** la totalité de l'ensemble constitué de l'extrudeuse (1), de la pompe (2) à engrenages, du tuyau flexible (3) et de la tuyère (4) peut être déplacée dans le sens longitudinal et dans le sens transversal.

6. Procédé selon l'une des revendications précédentes, **caractérisé en ce que** le tambour de montage de bandage de roue est immobile ou déplacé uniquement en rotation.

7. Procédé selon l'une des revendications précédentes, **caractérisé en ce que** le ruban (9) de matière est appliqué sur le sommet, la bande de jante, la paroi latérale, le revêtement de base ou le revêtement de sommet de la carcasse (6) de bandage de roue.

8. Procédé selon l'une des revendications précédentes, **caractérisé en ce que** le tambour de montage de bandage de roue présente une âme segmentée, le côté extérieur de l'âme formant la cavité de l'ébauche de bandage de roue.
